# EUROPÄISCHE PATENTSCHRIFT

(11) **EP 1 453 721 B1**
(45) Veröffentlichungstag und Bekanntmachung des Hinweises auf die Patenterteilung: **26.07.2006**
(21) Anmeldenummer: 02805284.3
(22) Anmeldetag: 21.11.2002
(51) Int. Cl.: B62D 7/18

(54) **ACHSSCHENKELBOLZENLAGERUNG**
STEERING KNUCKLE PIN BEARING
SUPPORT DE PIVOT DE FUSEE

(30) Priorität: 13.12.2001 DE 10161207
(43) Veröffentlichungstag der Anmeldung: 08.09.2004
(73) Patentinhaber: DaimlerChrysler AG, 70567 Stuttgart (DE)
(72) Erfinder: HAMPERL, Johann, 73734 Esslingen (DE)
(86) Internationale Anmeldenummer: PCT/EP2002/013069
(87) Internationale Veröffentlichungsnummer: WO 2003/053766

(56) Entgegenhaltungen:
- DE-A- 19 631 946
- DE-A- 19 955 509
- FR-A- 2 576 860
- US-A- 1 503 511
- US-A- 5 413 365

## Beschreibung

Die Erfindung betrifft eine Achsschenkelbolzenlagerung bei einer Achse eines Fahrzeugs, insbesondere eines Nutzfahrzeugs, zur Lagerung eines Fahrzeugrads am Fahrzeugchassis, mit den Merkmalen des Oberbegriffs des Anspruchs 1.

Aus der DE 196 31 946 A1 ist eine derartige Achsschenkelbolzenlagerung bekannt, die ein radseitiges erstes Lagerelement besitzt, das an einem chassisseitigen zweiten Lagerelement schwenkbar gelagert ist. Das radseitige erste Lagerelement weist ein Maul auf, in dem eine erste Lagerbohrung und eine zweite Lagerbohrung ausgebildet sind, die zueinander fluchten. Das chassisseitige zweite Lagerelement weist eine Faust auf, die in das Maul hineinragt und die dort einen Achsschenkellagerbolzen zwischen einem ersten Lagerzapfen und einem zweiten Lagerzapfen umgreift. Hierdurch sind an der Faust zwei zueinander fluchtende Lagerzapfen ausgebildet. Der erste Lagerzapfen ist über ein erstes Lager in der ersten Lagerbohrung gelagert, während der zweite Lagerzapfen über ein zweites Lager in der zweiten Lagerbohrung gelagert ist. Des Weiteren ist die erste Lagerbohrung mit einem Schraubdeckel verschlossen, der dabei mit einem Gewinde zusammenwirkt und an dem sich das erste Lager axial abstützt. Für die Montage der Achsschenkelbolzenlagerung kann nun der Schraubdeckel am Gewinde soweit schraubend verstellt werden, dass dadurch zwischen den Lagerelementen ein vorbestimmtes Reibmoment zwischen den Lagerelementen eingestellt werden kann. Im Unterschied dazu ist die zweite Lagerbohrung mit einem ortsfesten Deckel verschlossen, so dass die Relativlage zwischen den Lagerelementen in der Achsrichtung der Lagerzapfen durch den festsitzenden Deckel und dem sich daran abstürzenden zweiten Lager bestimmt ist.

Aus der US 5,413,365 ist eine andere Achsschenkelbolzenlagerung bekannt, bei der ebenfalls die erste Lagerbohrung mit einem Schraubdeckel verschließbar ist, wobei durch das Einschrauben des Schraubdeckels ein Außenring eines Kegellagers mit einem vorbestimmten Anzugsmoment gegen eine in der Lagerbohrung ausgebildete axiale Schulter verspannt werden kann. Hierdurch kann eine bestimmte axiale Vorspannung, mit welcher der Außenring an der Anlageschulter zur Anlage kommt, eingestellt werden. Eine Justierung des Reibmoments bzw. eine Justierung der Relativlage zwischen den Lagerelementen ist dadurch nicht möglich.

Eine weitere Achsschenkelbolzenlagerung ist aus der US 1,503,511 bekannt, bei der ein konischer Achsschenkellagerbolzen in einer komplementär dazu konisch ausgestalteten Öffnung die Faust durchdringt. Mittels eines Schraubdeckels kann nun der Achsschenkellagerbolzen axial verstellt werden, um eine Außenseite der Faust gegen eine Innenseite des Mauls axial zu verspannen.

Weitere Achsschenkelbolzenlagerungen sind beispielsweise aus der DE 199 55 509 A1 und aus der DE 197 38 113 A1 bekannt.

Bei einer Achsschenkelbolzenlagerung muß bei der Montage eine vorbestimmte Relativlage zwischen den beiden Lagerelementen relativ genau eingestellt werden, um dadurch die Lenkkinematik der Radlagerung zu optimieren, insbesondere kann dadurch der Lenkungslauf verfeinert werden. Darüber hinaus ist es erforderlich, zwischen den Lagerelementen ein vorbestimmtes Reibmoment einzustellen, um dadurch die fahrdynamischen Eigenschaften zu verbessern, insbesondere kann dadurch ein sogenanntes "Lenkungszittern" vermieden werden. Die Einstellung der Relativlage sowie des Reibmoments kann gemäß der FR 2 576 860 A dadurch realisiert werden, daß an geeigneter Stelle, z.B. axial zwischen einem der Lager und dessen axialer Abstützung an oder in der zugehörigen Lagerbohrung, eine Ausgleichsscheibe oder ein Ausgleichsscheibenpaket eingesetzt wird. Das Auffinden der am besten geeigneten Ausgleichsscheibe bzw. des am besten geeigneten Ausgleichsscheibenpakets kann dabei relativ zeitaufwendig sein. Des weiteren steht nur eine vorbestimmte Auswahl an Ausgleichsscheiben unterschiedlicher Dicke zur Verfügung, so daß die Einstellung der gewünschten Relativlage sowie des gewünschten Reibmoments nur in vorgegebenen Stufen möglich ist.

Die vorliegende Erfindung beschäftigt sich mit dem Problem, für eine Achsschenkelbolzenlagerung der eingangs genannten Art eine verbesserte Ausführungsform anzugeben, bei der insbesondere die Einstellung der Relativlage und des Reibmoments zwischen den Lagerelementen vereinfacht ist.

Dieses Problem wird durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die beiden Lagerbohrungen jeweils mittels eines Schraubdeckels zu verschließen, derart, daß bei der Montage der Schraubdeckel in der Achsrichtung der Lagerzapfen relativ zur Lagerbohrung schraubend verstellbar ist. Solange der in der anderen Lagerbohrung untergebrachte andere Lagerzapfen axial verstellbar ist, kann durch die Positionierung des Schraubdeckels die Relativlage zwischen den Lagerelementen in der Achsrichtung der Lagerzapfen stufenlos und besonders einfach eingestellt werden. Wenn die andere Lagerbohrung axial verschlossen ist und das darin untergebrachte Lager bzw. der darin untergebrachte Lagerzapfen axial abgestützt ist, kann durch Verdrehen des Schraubdeckels das Reibmoment zwischen den Lagerelementen stufenlos und besonders einfach eingestellt werden. Bei der erfindungsgemäßen Achsschenkelbolzenlagerung kann somit die Einstellung der Relativlage und des Reibmoments zwischen den Lagerelementen mit einer erhöhten Genauigkeit bei gleichzeitig reduziertem Aufwand durchgeführt werden.

Da bei der Erfindung beide Lagerbohrungen jeweils mit einem Schraubdeckel verschlossen sind, ergibt sich eine zusätzliche Vereinfachung für das Einstellen der gewünschten Relativlage sowie des gewünschten Reibmoments, da durch die Verstellung des einen Schraubdeckels die gewünschte Relativlage eingestellt werden kann, während anschließend durch das Verdrehen des anderen Schraubdeckels das gewünschte Reibmoment eingestellt wird.

Es ist zweckmäßig, den einen Schraubdeckel oder beide Schraubdeckel nach der Montage gegen ein Verdrehen zu sichern. Auf diese Weise können die aufgefundenen Einstellungen gesichert werden.

Grundsätzlich kann das die Lagerbohrungen tragende Lagerelement zumindest im Bereich einer seiner Lagerbohrungen mit einem Außengewinde versehen sein, auf das der zugehörige Schraubdeckel aufschraubbar ist, wobei dieser dann über ein korrespondierendes Innengewinde verfügt. Es ist jedoch vorteilhaft, die jeweilige Lagerbohrung mit einem Innengewinde zu versehen, so daß der zugehörige Schraubdeckel ein korrespondierendes Außengewinde trägt. Bei dieser Bauweise reduzieren sich die über die Gewinde zu übertragenden Kräfte. Außerdem baut diese Ausführungsform kompakter.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: einen Längsschnitt durch eine Achsschenkelbolzenlagerung nach der Erfindung bei einer angetriebenen Achse und
- Fig. 2: eine Ansicht wie in Fig. 1, jedoch bei einer nicht angetriebenen Achse.

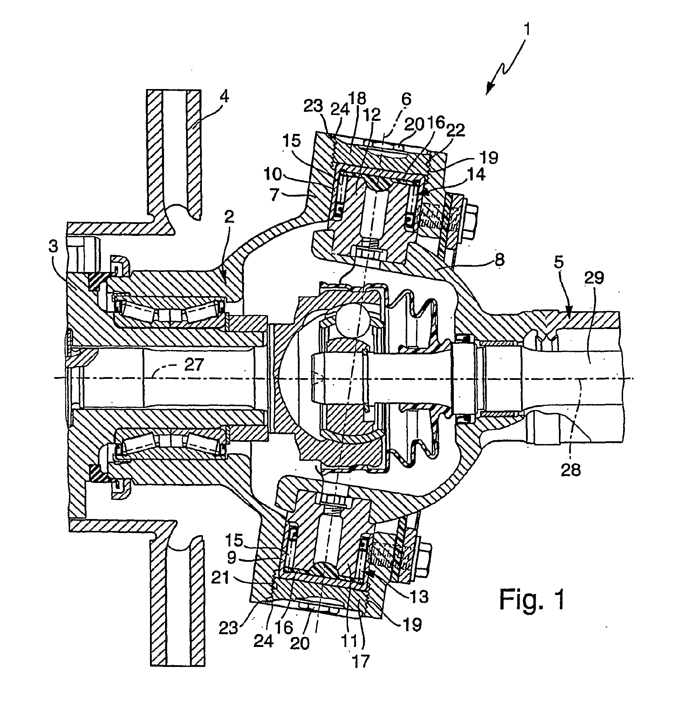

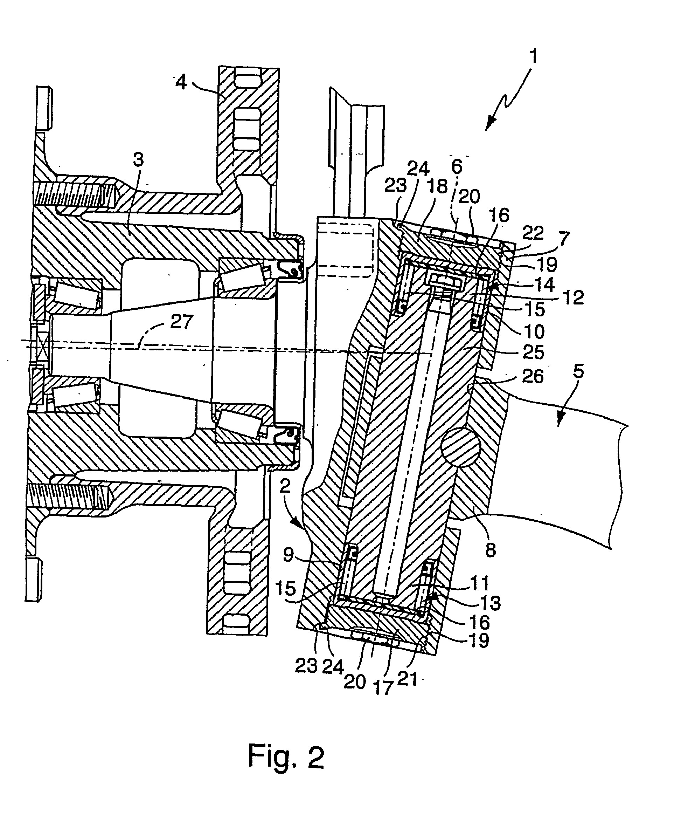

Entsprechend den Fig. 1 und 2 besitzt eine erfindungsgemäße Achsschenkelbolzenlagerung 1 ein radseitiges erstes Lagerelement 2, das mit einer Nabe 3 eines im übrigen nicht gezeigten Fahrzeugrades verbunden ist. Mit 4 ist eine Scheibenbremse des Rades bezeichnet. Dieses erste Lagerelement 2 ist an einem chassisseitigen zweiten Lagerelement 5 schwenkbar gelagert, das an einem, hier nicht gezeigten Fahrzeugchassis angebracht ist. Üblicherweise handelt es sich beim zweiten Lagerelement 5 um einen Starrachskörper. Eine Schwenkachse, um welche die beiden Lagerelemente 2 und 5 aneinander schwenkbar gelagert sind, ist mit 6 bezeichnet.

Bei den hier gezeigten Ausführungsformen weist jeweils das erste Lagerelement 2, also das radseitige Lagerelement 2 ein Maul 7 auf, während das zweite Lagerelement 5, also das chassisseitige Lagerelement 5 eine Faust 8 besitzt. Es ist klar, daß grundsätzlich auch das chassisseitige zweite Lagerelement 5 mit einem Maul ausgestattet sein kann, so daß dann die Faust am radseitigen ersten Lagerelement 2 ausgebildet ist.

Das Maul 7 besitzt eine, in den Fig. 1 und 2 unten dargestellte, erste Lagerbohrung 9 sowie eine in den Fig. 1 und 2 oben dargestellte zweite Lagerbohrung 10. Die beiden Lagerbohrungen 9 und 10 sind am Maul 7 so positioniert, daß sie zueinander fluchten und koaxial zur Schwenkachse 6 angeordnet sind. Die Faust 8 ragt in das Maul 7 hinein und weist einen in den Figuren unten dargestellten ersten Lagerzapfen 11 sowie einen in den Figuren oben dargestellten zweiten Lagerzapfen 12 auf. Auch die Lagerzapfen 11 und 12 sind so an der Faust 8 angeordnet, daß sie zueinander fluchten und koaxial zur Schwenkachse 6 ausgerichtet sind. Der erste Lagerzapfen 11 ist in ein topfförmiges erstes Lager 13 eingesteckt und über dieses in der ersten Lagerbohrung 9 gelagert. In entsprechender Weise ist auch der zweite Lagerzapfen 12 in ein topfförmiges zweites Lager 14 eingesteckt und über dieses in der zweiten Lagerbohrung 10 gelagert. Die Lager 13 und 14 enthalten jeweils ein Radiallager 15, z.B. in Form eines Nadellagers, sowie ein Axiallager 16, z.B. in Form eines Gleitlagers. Zweckmäßig sind die Lager 13,14 hermetisch dicht an den Lagerzapfen 11,12 angebracht, so daß die Lager 13 und 14 zweckmäßig wartungsfrei ausgebildet sein können. Die beiden Lager 13 und 14 sind hier als einseitig geschlossene Lagerbüchsen ausgebildet.

Die erste Lagerbohrung 9 ist in axialer Richtung mit einem ersten Schraubdeckel 17 verschlossen. In entsprechender Weise ist auch die zweite Lagerbohrung 10 mit einem zweiten Schraubdeckel 18 in axialer Richtung verschlossen. Der erste Schraubdeckel 17 verschließt dabei die erste Lagerbohrung 9 an einer von der Faust 8 abgewandten Außenseite. In entsprechender Weise verschließt auch der zweite Schraubdeckel 18 die zweite Lagerbohrung 10 an einer von der Faust 8 abgewandten Außenseite.

Die Schraubdeckel 17 und 18 besitzen jeweils ein Außengewinde 19 und sind axial außen mit einem Außenmehrkant 20 ausgestattet. Für den ersten Schraubdeckel 17 ist am Maul 7 ein erstes Gewinde 21 vorgesehen, das hier folglich als Innengewinde ausgebildet ist und in die erste Lagerbohrung 9 eingeschnitten ist. In entsprechender Weise ist im Maul 7 auch für den zweiten Schraubdeckel 18 ein zweites Gewinde 22 vorgesehen, das ebenfalls als Innengewinde ausgebildet und in die zweite Lagerbohrung 10 eingeschnitten ist. An diesen Schraubdeckeln 17 und 18 stützt sich das jeweilige Lager 13 bzw. 14 in axialer Richtung ab.

Die Lagerbohrungen 9 und 10 besitzen an ihrem axial außen liegenden Rand wenigstens eine Aussparung oder Einkerbung 23, in die ein Randabschnitt des jeweiligen Schraubdeckels 17,18 unter Ausbildung einer Einschlagnase 24 hineinragt. Diese Einschlagnase 24 steht dadurch in der Schraubrichtung des jeweiligen Schraubdeckels 17,18 formschlüssig mit der jeweiligen Kerbe 23 im Eingriff, wodurch der Schraubdeckel 17,18 gegen Verdrehen gesichert ist. Der Bereich dieser Verdrehsicherung ist in den Figuren beim unten dargestellten ersten Schraubdeckel 17 durch einen Kreis hervorgehoben.

Die Gewinde 21 und 22 sowie die Schraubdeckel 17 und 18 sind so aufeinander abgestimmt und bezüglich der Achsrichtung der Lagerbolzen 11,12 so dimensioniert, daß für beide Schraubdeckel 17,18 ein Einstellbereich ausgebildet ist, in dem die Schraubdeckel 17,18 in der Achsrichtung der Lagerzapfen 11,12 zumindest während der Montage der Achsschenkelbolzenlagerung 1 verstellbar sind. Die Achsrichtung der Lagerzapfen 11 und 12 fällt hier mit der Schwenkachse 6 zusammen, so daß im folgenden auch die Achsrichtung der Lagerzapfen 11,12 mit der Bezugszahl 6 bezeichnet wird.

Bei der Ausführungsform gemäß Fig. 1 ist die Achsschenkelbolzenlagerung 1 für eine angetriebene Achse bzw. für ein angetriebenes Rad ausgebildet. Bei dieser Ausführungsform sind die Lagerzapfen 11 und 12 jeweils als separate Bauteile ausgebildet, die an der Faust 8 des zweiten Lagerelements 5, z.B. mittels Preßsitzen, befestigt sind. Im Unterschied dazu handelt es sich in Fig. 2 bei der Achsschenkelbolzenlagerung 1 um eine Variante, die bei einer nicht angetriebenen Achse bzw. bei einem nicht angetriebenen Fahrzeugrad zur Anwendung kommen kann. Hierbei sind die beiden Lagerzapfen 11 und 12 an einem Achsschenkellagerbolzen 25 ausgebildet, der in eine Öffnung 26 der Faust 8 eingesetzt ist. Hierdurch umgreift die Faust 8 den Achsschenkellagerbolzen 25 zwischen den Lagerzapfen 11 und 12. Der Achsschenkellagerbolzen 25 kann ebenfalls durch Preßsitz und/oder durch Formschluß an der Faust 8 befestigt sein.

Die erfindungsgemäße Achsschenkelbolzenlagerung 1 kann wie folgt montiert werden:

Zunächst sind beide Lagerbohrungen 9 und 10 offen. In herkömmlicher Weise können dann die Faust 8 in das Maul 7 und die Lagerzapfen 11 und 12 mit den Lagerbüchsen 13 und 14 in die Lagerbohrungen 9 und 10 eingesetzt werden.

Beim Einsetzen der Lagerzapfen 11,12 kann, beispielsweise bei der Ausführungsform gemäß Fig. 2, eine der Lagerbohrungen 9,10 bereits mit dem zugehörigen Schraubdeckel 17,18 verschlossen sein. Zweckmäßig wird diese Lagerbohrung 9,10 jedoch erst nach dem Einbau der Lagerzapfen 11,12 verschlossen.

Nach dem Einsetzen der Lagerzapfen 11,12 in ihre Lagerbohrungen 9,10 erfolgt die Einstellung einer gewünschten Relativlage zwischen den beiden Lagerelementen 2 und 5. Bei diesem Einstellvorgang wird nun eine der Lagerbohrungen 9,10, zweckmäßig die untere erste Lagerbohrung 9, mit dem ersten Schraubdeckel 17 verschlossen.

Durch schraubendes Verstellen des ersten Schraubdeckels 17 kann nun die Relativlage des ersten Schraubdeckels 17 relativ zur ersten Lagerbohrung 9 in der Achsrichtung 6 der Lagerzapfen 11,12 verstellt werden. Da sich das zweite Lagerelement 5 über den ersten Lagerzapfen 11 und das erste Lager 13 am ersten Schraubdeckel 17 abstützt, verstellt sich dadurch auch die Relativlage zwischen dem zweiten Lagerelement 5 und dem ersten Lagerelement 2. Bei der Ausführungsform gemäß Fig. 1 entspricht die gewünschte Relativlage derjenigen Position, in der eine Nabenachse 27 des Fahrzeugrads mit einer Mittelachse 28 einer Antriebswelle 29 fluchtet. Bei der Ausführungsform gemäß Fig. 2 ist die gewünschte Relativlage durch andere vorbestimmte Parameter definiert; insbesondere sollen die Nabenachsen 27 an beiden Fahrzeugseiten zueinander fluchten.

Nach dem Auffinden der gewünschten Relativlage zwischen den beiden Lagerelementen 2 und 5 kann der erste Schraubdeckel 17 bereits drehgesichert werden. Beispielsweise durch das Einschlagen der Einschlagnase 24 in die Kerbe 23. Alternativ oder zusätzlich kann der erste Schraubdeckel 17 auch geklebt oder gelötet werden.

Während dieser Einstellphase zum Auffinden der gewünschten Relativlage kann der zweite Schraubdeckel 18 bereits (teilweise) in das zweite Gewinde 22 eingeschraubt sein, wobei jedoch darauf zu achten ist, daß kein axialer Kontakt zwischen dem zweiten Lager 14 und dem zweiten Schraubdeckel 18 vorliegt.

In einer nachfolgende Montagephase kann nun das gewünschte Reibmoment zwischen den Lagerelementen 2 und 5 eingestellt werden, das bei Schwenkbewegungen um die Schwenkachse 6 herrschen soll. Zu diesem Zweck wird nun der zweite Schraubdeckel 18 gegebenenfalls eingesetzt und soweit drehend verstellt, bis sich eine Verspannung ergibt, die das gewünschte Reibmoment erzeugt. Sobald das vorbestimmte Reibmoment gefunden ist, kann auch der zweite Schraubdeckel 18 in entsprechender Weise gegen Verdrehen gesichert werden.

Die durchzuführenden Einstellungen und Justagen können bei der erfindungsgemäßen Achsschenkelbolzenlagerung 1 mit herkömmlichem Werkzeug, ohne besonderen Aufwand stufenlos und dadurch sehr genau bei geringem Zeitbedarf durchgeführt werden. Die Vorteile der erfindungsgemäßen Achsschenkelbolzenlagerung 1 im Hinblick auf ihre Montierbarkeit liegen im Vergleich zu herkömmlichen Achsschenkelbolzenlagerungen, die mit Ausgleichsscheiben bzw. Ausgleichsscheibenpaketen eingestellt werden müssen, auf der Hand.

Die Einstellbereiche der Schraubdeckel 17,18 sind durch geeignete Dimensionierung der Gewinde 21,22 an die Herstellungstoleranzen bzw. -toleranzkette angepaßt, um für jeden Fall die gewünschten Einstellungen vornehmen zu können.

## Patentansprüche

1. Achsschenkelbolzenlagerung bei einer Achse eines Fahrzeugs, insbesondere eines Nutzfahrzeugs, zur Lagerung eines Fahrzeugrads am Fahrzeugchassis,
mit folgenden Merkmalen:
- ein radseitiges erstes Lagerelement (2) ist an einem chassisseitigen zweiten Lagerelement (5) schwenkbar gelagert,
- eines der Lagerelemente (2) weist ein Maul (7) auf, in dem eine erste Lagerbohrung (9) und eine zweite Lagerbohrung (10) ausgebildet sind, die zueinander fluchten,
- das andere Lagerelement (5) weist eine Faust (8) auf, die in das Maul (7) hineinragt und an der ein erster Lagerzapfen (11) und ein zweiter Lagerzapfen (12) ausgebildet oder angebracht sind, die zueinander fluchten,
- der erste Lagerzapfen (11) ist über ein erstes Lager (13) in der ersten Lagerbohrung (9) gelagert,
- der zweite Lagerzapfen (12) ist über ein zweites Lager (14) in der zweiten Lagerbohrung (10) gelagert,
- die erste Lagerbohrung (9) ist, mit einem ersten Schraubdeckel (17) verschlossen, der dabei mit einem ersten Gewinde (21) zusammenwirkt und an dem sich das erste Lager (13) axial abstützt,
- zumindest für eine Montage der Achsschenkelbolzenlagerung (1) ist der erste Schraubdeckel (17) am ersten Gewinde (21) soweit schraubend verstellbar, daß **dadurch** zwischen den Lagerelementen (2,5) ein vorbestimmtes Reibmoment zwischen den Lagerelementen (2,5) einstellbar ist,
**dadurch gekennzeichnet,**
- **daß** die zweite Lagerbohrung (10) mit einem zweiten Schraubdeckel (18) verschlossen ist, der dabei mit einem zweiten Gewinde (22) zusammenwirkt und an dem sich das zweite Lager (14) axial abstützt,
- **daß** zumindest für eine Montage der Achsschenkelbolzenlagerung (1) beide Schraubdeckel (17,18) am jeweiligen Gewinde (21,22) soweit schraubend verstellbar sind, daß **dadurch** zwischen den Lagerelementen (2,5) ein vorbestimmtes Reibmoment und in der Achsrichtung der Lagerzapfen (11,12) eine vorbestimmte Relativlage zwischen den Lagerelementen (2,5) jeweils beliebig stufenlos einstellbar sind.

2. Achsschenkelbolzenlagerung nach Anspruch 1,
**dadurch gekennzeichnet,**
**daß** der oder die Schraubdeckel (17,18) nach der Montage gegen Verdrehen gesichert ist/sind.

3. Achsschenkelbolzenlagerung nach einem der Ansprüche 1 und 2,
**dadurch gekennzeichnet,**
**daß** das oder die Gewinde (21,22) in der zugehörigen Lagerbohrung (9,10) als Innengewinde ausgebildet ist/sind.

4. Achsschenkelbolzenlagerung nach einem der Ansprüche 1 bis 3,
**dadurch gekennzeichnet,**
**daß** wenigstens einer der Lagerzapfen (11,12) als separates Bauteil ausgebildet und an der Faust (8) befestigt ist.

5. Achsschenkelbolzenlagerung nach einem der Ansprüche 1 bis 3,
**dadurch gekennzeichnet,**
**daß** die Lagerzapfen (11,12) an einem Achsschenkellagerbolzen (25) ausgebildet sind, wobei die Faust (8) den Achsschenkellagerbolzen (25) zwischen den Lagerzapfen (11,12) umgreift.

6. Verfahren zur Montage einer Achsschenkelbolzenlagerung (1) nach Anspruch 1,
- bei dem nach dem Einbringen der Faust (8) in das Maul (7) und der Lagerzapfen (11,12) sowie der Lager (13,14) in die Lagerbohrungen (9,10) der erste Schraubdeckel (17) solange schraubend verstellt wird, bis die beiden Lagerelemente (2,5) zueinander ihre vorbestimmte Relativlage aufweisen, und
- bei dem nach dem Einstellen der Relativlage der zweite Schraubdeckel (18) solange schraubend verstellt wird, bis zwischen den beiden Lagerelementen (2,5) das vorbestimmte Reibmoment herrscht.

## Claims

1. Steering knuckle pin bearing in an axle of a vehicle, in particular a commercial vehicle, for mounting a vehicle wheel on the vehicle chassis, having the following features:
- a wheel-side first bearing element (2) is mounted pivotably on a chassis-side second bearing element (5),
- one of the bearing elements (2) has a mouth (7) in which a first bearing bore (9) and a second bearing bore (10) which are aligned with each other are formed,
- the other bearing element (5) has a stub (8) which protrudes into the mouth (7) and on which a first bearing journal (11) and a second bearing journal (12) which are aligned with each other are formed or fitted,
- the first bearing journal (11) is mounted in the first bearing bore (9) via a first bearing (13),
- the second bearing journal (12) is mounted in the second bearing bore (10) via a second bearing (14),
- the first bearing bore (9) is closed by a first screw cap (17) which interacts with a first thread (21) and on which the first bearing (13) is supported axially,
- at least for the purpose of installing the steering knuckle pin bearing (1), the first screw cap (17) is adjustable by screwing on the first thread (21) to an extent such that, as a result, between the bearing elements (2, 5) a predetermined moment of friction can be set between the bearing elements (2, 5), **characterized**
- **in that** the second bearing bore (10) is closed by a second screw cap (18) which interacts with a second thread (22) and on which the second bearing (14) is supported axially,
- **in that** at least for the purpose of installing the steering knuckle pin bearing (1), both screw caps (17, 18) are adjustable by screwing on the particular thread (21, 22) to an extent such that, as a result, a predetermined moment of friction can be set between the bearing elements (2, 5) and, in the axial direction of the bearing journals (11, 12), a predetermined relative position can be set between the bearing elements (2, 5) in each case in an infinitely variable manner as desired.

2. Steering knuckle pin bearing according to Claim 1, **characterized in that** the screw cap or screw caps (17, 18) is/are secured against rotation after being installed.

3. Steering knuckle pin bearing according to either of Claims 1 and 2, **characterized in that** the thread or threads (21, 22) is/are formed as an internal thread in the associated bearing bore (9, 10).

4. Steering knuckle pin bearing according to one of Claims 1 to 3, **characterized in that** at least one of the bearing journals (11, 12) is designed as a separate component and is fastened on the stub (8).

5. Steering knuckle pin bearing according to one of Claims 1 to 3, **characterized in that** the bearing journals (11, 12) are formed on a steering knuckle bearing pin (25), the stub (8) engaging around the steering knuckle bearing pin (25) between the bearing journals (11, 12).

6. Method for installing a steering knuckle pin bearing (1) according to Claim 1,
- in which after the stub (8) is placed into the mouth (7) and the bearing journals (11, 12) and the bearings (13, 14) are placed into the bearing bores (9, 10), the first screw cap (17) is adjusted by screwing until the two bearing elements (2, 5) are in their predetermined relative position to each other, and
- in which after the relative position is set, the second screw cap (18) is adjusted by screwing until the predetermined moment of friction prevails between the two bearing elements (2, 5).

## Revendications

1. Support de pivot de fusée, pour un essieu d'un véhicule, en particulier d'un véhicule utilitaire, pour le montage en palier d'une roue de véhicule sur un châssis de véhicule,
présentant les caractéristiques suivantes :
- un premier élément de palier (2), situé côté roue, est monté à pivotement sur un deuxième élément de palier (5), situé côté châssis,
- l'un des éléments de palier (2) présente un bec (7), dans lequel sont réalisés un premier perçage de palier (9) et un deuxième perçage de palier (10) qui sont alignés entre eux,
- l'autre élément de palier (5) présente un élément en forme de poing (8), pénétrant dans le bec (7) et sur lequel sont réalisés ou montés un premier élément de palier (11) et un deuxième élément de palier (12), alignés entre eux,
- le premier tourillon de palier (11) est monté dans le premier perçage de palier (9), par l'intermédiaire d'un premier palier (13),
- le deuxième tourillon de palier (12) est monté dans le deuxième perçage de palier (10), par l'intermédiaire d'un deuxième palier (14),
- le premier perçage de palier (9) est fermé avec un premier couvercle vissé (17), qui coopère alors avec un premier filetage (21) et sur lequel prend appui axialement le premier palier (13),
- au moins pour un montage du support de pivot de fusée (1), le premier couvercle vissé (17) est réglable par vissage sur le premier filetage (21), à un degré faisant que, de ce fait, entre les éléments de palier (2, 5), un couple de friction prédéterminé est réglable entre les éléments de palier (2, 5),
**caractérisé en ce que**
- le deuxième perçage de palier (10) est obturé par un deuxième couvercle vissé (18), qui coopère alors avec un deuxième filetage (22) et sur lequel prend appui axialement le deuxième palier (14),
- **en ce que**, au moins pour un montage du support de pivot de fusée (1), les deux couvercles vissés (17, 18) sont réglables par vissage sur le filetage (21, 22) respectif, à un degré tel que, de ce fait, entre les éléments de palier (2, 5), un couple de friction prédéterminé et, dans la direction axiale des tourillons de palier (11, 12), une position relative prédéterminée entre les éléments de palier (2, 5), sont réglables chaque fois à volonté, de façon progressive continue.

2. Support de pivot de fusée selon la revendication 1, **caractérisé en ce que** le ou les couvercle(s) vissé(s) (17, 18) est/sont assuré(s) contre toute rotation après montage.

3. Support de pivot de fusée selon l'une des revendications 1 et 2, **caractérisé en ce que** le ou les filetage(s) (21, 22) est/sont réalisé(s) sous forme de filetage intérieur dans le perçage de palier (9, 10) afférent.

4. Support de pivot de fusée selon l'une des revendications 1 à 3, **caractérisé en ce qu'**au moins l'un des tourillons de palier (11, 12) est réalisé sous la forme de composant séparé et fixé sur l'élément formant poing (8).

5. Support de pivot de fusée selon l'une des revendications 1 à 3, **caractérisé en ce que** les tourillons de palier (11, 12) sont réalisés sur un pivot de fusée (25), l'élément formant poing (8) entourant le pivot de fusée (25) entre les tourillons de palier (11, 12).

6. Procédé de montage d'un support de pivot de fusée (1) selon la revendication 1,
- dans lequel après introduction de l'élément formant poing (8) dans le bec (7) et les tourillons de palier (11, 12) ainsi que les paliers (13, 14) dans les perçages de palier (9, 10), le premier couvercle vissé (17) est réalisé par vissage jusqu'à ce que les deux éléments de palier (2, 5) présentent leur position relative prédéterminée mutuelle, et
- dans lequel, après réglage de la position relative, le deuxième couvercle vissé (18) est réglé avec vissage, jusqu'à ce que le couple de fiction prédéterminé règne entre les deux éléments de palier (2, 5).
